Europäisches Patentamt

European Patent Office

Office européen des brevets

(11) Numéro de publication: **0 309 315**
**B1**

## (12) FASCICULE DE BREVET EUROPEEN

(45) Date de publication du fascicule du brevet:
**22.11.90**

(21) Numéro de dépôt: **88402312.8**

(22) Date de dépôt: **14.09.88**

(51) Int. Cl.⁵: **B60J 1/17, E05F 11/44**

(54) Dispositif de lève-vitre, notamment pour véhicule automobile.

(30) Priorité: **23.09.87 FR 8713147**

(43) Date de publication de la demande:
**29.03.89 Bulletin 89/13**

(45) Mention de la délivrance du brevet:
**22.11.90 Bulletin 90/47**

(84) Etats contractants désignés:
**DE ES GB IT SE**

(56) Documents cités:
**FR-A- 2 043 085**

(73) Titulaire: **ECIA - EQUIPEMENTS ET COMPOSANTS POUR L'INDUSTRIE AUTOMOBILE, F-25400 Audincourt (Doubs)(FR)**

(72) Inventeur: **Escaravage, Gérard, 5 Impasse des Graverots, F-25700 Valentigney(FR)**

(74) Mandataire: **Mestre, Jean et al, c/o CABINET LAVOIX 2, place d'Estienne d'Orves, F-75441 Paris Cédex 09(FR)**

## Description

La présente invention concerne un dispositif de lève-vitre pour véhicule automobile.

On connaît déjà dans l'état de la technique un certain nombre de dispositifs de lève-vitre pour véhicule automobile du type comportant des moyens d'actionnement d'un mécanisme de montée et de descente de la vitre, à bras en X, dans lequel des extrémités des bras comportent des patins coulissant dans une glissière d'une structure de support comportant des moyens de fixation de la vitre.

Ces moyens de fixation sont par exemple constitués, comme cela est décrit dans la demande de brevet européen EP-A-0 208 237, par un téton d'une lèvre des moyens de fixation, adapté pour s'engager dans un évidement de la vitre.

Par ailleurs, on connaît également d'après le document US-A-4 004 371, des moyens de fixation d'une vitre qui comprennent une platine dans laquelle sont ménagées deux perforations à travers lesquelles s'étendent deux vis adaptées pour s'engager dans deux trous correspondants de la vitre afin de fixer cette vitre sur la platine et donc sur le reste du mécanisme de montée et de descente de celle-ci.

Cependant, tous ces dispositifs présentent un certain nombre d'inconvénients, notamment au niveau de leur montage.

En effet, ce montage consiste à introduire le mécanisme de montée et de descente de la vitre à l'intérieur du caisson de porte, à glisser la vitre à travers la fente correspondante de la porte et enfin à fixer la vitre dans les moyens de fixation de la structure de support du mécanisme de montée et de descente de la vitre.

Ces opérations doivent être réalisées en "aveugle" à l'intérieur du caisson de porte dont l'accès est très difficile. De plus, en raison de la conception du mécanisme de montée et de descente, qui comporte des patins coulissant dans la glissière de la structure de support sur laquelle sont prévus les moyens de fixation de la vitre, cette structure de support peut se déplacer librement par rapport au reste du mécanisme de sorte que les monteurs doivent tatonner plus ou moins longtemps avant de trouver la position idéale de cette structure de support et donc des moyens de fixation par rapport aux éléments de fixation complémentaires de la vitre afin de réaliser la fixation de celle-ci sur la structure de support.

Par ailleurs, les patins de guidage utilisés actuellement s'usent de manière très importante, ce qui induit, avec le temps, un jeu perturbant le fonctionnement du dispositif de lève -vitre et introduisant des vibrations sources de bruits.

Le but de l'invention est donc de résoudre ces problèmes en proposant un dispositif de lève -vitre qui soit simple, fiable, d'un prix de revient peu élevé et qui permette d'assurer un montage très facile de la vitre dans les moyens de fixation de celui-ci.

A cet effet, l'invention a pour objet un dispositif de lève-vitre, notamment pour véhicule automobile, du type comportant des moyens d'actionnement d'un mécanisme de montée et de descente de la vitre, à bras en X, dans lequel des extrémités des bras comportent des patins coulissant dans une glissière d'une structure de support comportant des moyens de fixation de la vitre (Dispositif divulgué, par exemple dans FR-A 2 043 085), caractérisé en ce que des moyens de butée frangibles sont prévus dans le trajet de déplacement des patins dans la glissière, de sorte que, lorsque les patins sont en appui contre ces moyens de butée, ils bloquent la structure de support position par rapport aux patins et donc au mécanisme de lèvre-vitre et déterminent ainsi une position de montage de la vitre dans les moyens de fixation de la vitre sur la structure de support, les moyens de butée étant frangibles par les patins lors de la première manoeuvre tendant à les écarter.

Avantageusement, les patins présentent une section longitudinale rectangulaire et ils sont montés articulés autour de rotules fixées sur les extrémités correspondantes des bras.

L'invention sera mieux comprise à l'aide de la description qui va suivre, donnée uniquement à titre d'exemple et faite en se référant aux dessins annexés, sur lesquels :

- la Fig.1 représente une vue partielle d'un dispositif de lève-vitre selon l'invention;
- la Fig.2 représente une vue de détail représentant un second mode de réalisation de moyens de butée entrant dans la constitution d'un dispositif selon l'invention;
- la Fig.3 représente une autre vue de détail représentant un second mode de réalisation de moyens de fixation entrant dans la constitution d'un dispositif selon l'invention; et
- la Fig.4 représente une vue de côté illustrant la liaison entre un bras d'un mécanisme de montée et de descente de la vitre et une structure de support, entrant dans la constitution d'un dispositif selon l'invention.

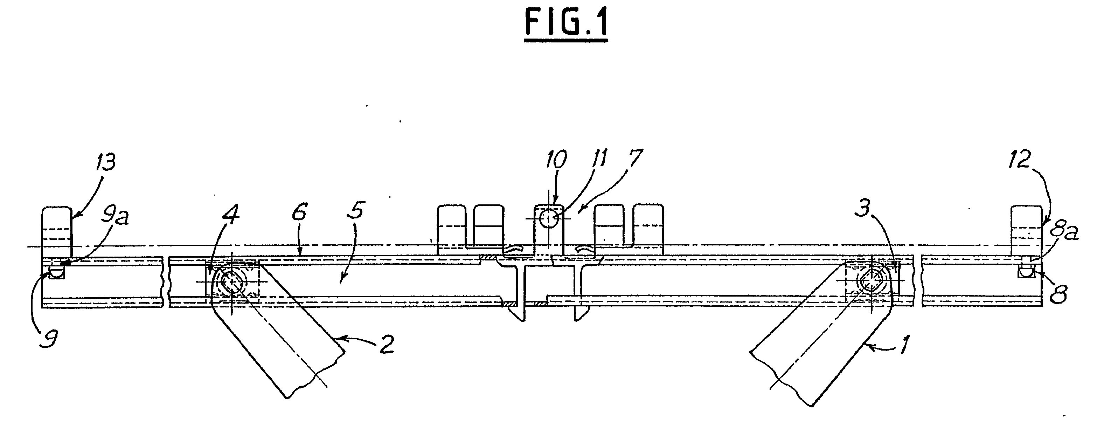

Ainsi qu'on peut le voir sur la Fig.1, un dispositif de lève-vitre, selon l'invention, comporte des moyens d'actionnement (non représentés) d'un mécanisme de montée et de descente de la vitre, à bras en X, référencés respectivement par 1 et 2 sur cette figure, dans lequel les extrémités des bras 1 et 2 comportent des patins, respectivement 3 et 4, coulissant dans une glissière 5 d'une structure de support 6 comportant des moyens de fixation 7 de la vitre (non représentée). Les moyens d'actionnement de ce mécanisme de montée et de descente de la vitre à bras en X, étant bien connus dans l'état de la technique, on ne les décrira pas en détail et on notera simplement que ces moyens d'actionnement peuvent être constitués par des moyens manuels actionnés par exemple par une manivelle ou des moyens électriques comportant un motoréducteur d'actionnement.

Selon l'invention, des moyens de butée 8 et 9 sont prévus dans le trajet de déplacement des patins 3 et 4 respectivement, dans la glissière 5 de la structure de support, de sorte que lorsque les patins 3 et 4 sont en appui contre les moyens de butée 8 et 9, ils bloquent la structure de support 6 en position par rapport aux patins 3 et 4 et donc au reste du mécanisme de lève-vitre et déterminent ainsi une position stable de montage de la vitre dans les moyens de fixation 7 de celle-ci sur la structure de support 6. En effet, en bloquant la position de la structure de support 6 par rapport aux patins par l'intermédiaire des moyens de butée 8 et 9, on bloque également les moyens de fixation 7 dans une position déterminée par exemple dans le trajet de déplacement des moyens complémentaires prévus sur la vitre pour assurer la fixation de celle-ci sur les moyens de fixation 7 de la structure de support. Ainsi, le monteur n'a plus à tâtonner pour trouver la position idéale des moyens de fixation 7. Ces moyens de fixation sont par exemple constitués par un certain nombre de lèvres de centrage et de positionnement de la partie inférieure de la vitre, l'une, 10, de ces lèvres comportant par exemple un téton 11 adapté pour s'engager dans un évidement correspondant de la vitre afin d'assurer la fixation de celle-ci sur la structure de support.

Les moyens de butées 8 et 9 sont frangibles par les patins 3 et 4 lors de la première manoeuvre des moyens d'actionnement du mécanisme de montée et de descente de la vitre, tendant à écarter ceux-ci. Ainsi, une fois cassés, ces moyens de butée 8 et 9 ne gêneront plus le fonctionnement normal du dispositif de lève-vitre.

Comme on peut le voir sur cette figure 1, les moyens de butée 8 et 9 sont constitués chacun par une partie en saillie s'étendant transversalement dans la glissière 5 de la structure de support, ces parties en saillie étant reliées par des zones 8a, 9a de moindre résistance, à des moyens 12, 13 de positionnement de la vitre sur la structure de support, disposés à chaque extrémité de celle-ci.

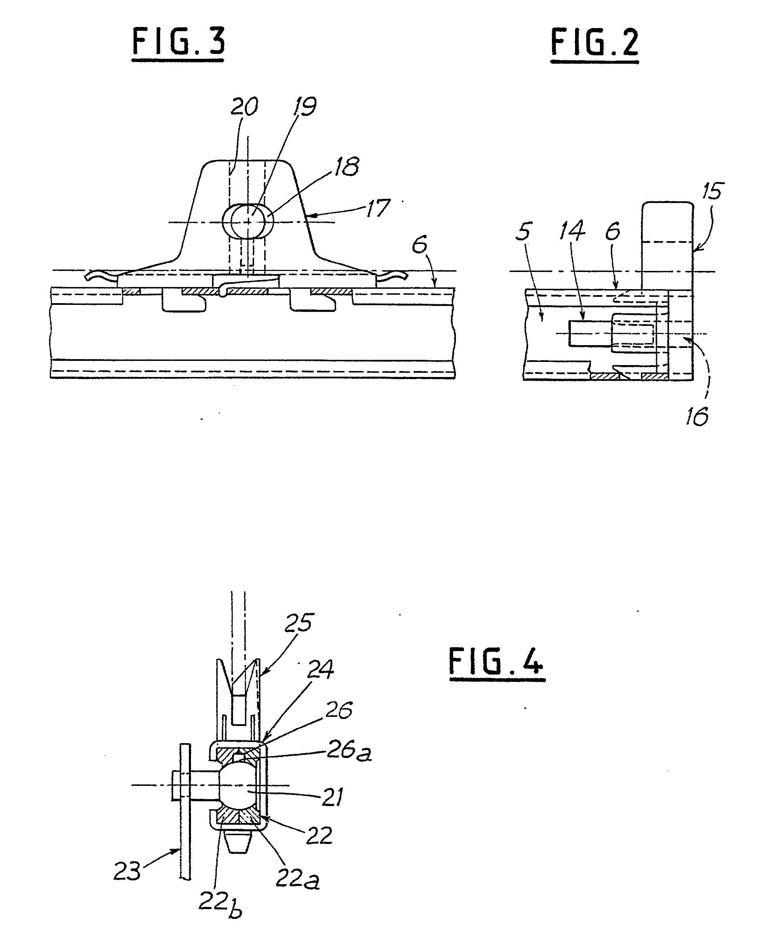

Cependant, et comme on peut le voir sur la Fig.2, les moyens de butée peuvent également comprendre des doigts 14 s'étendant longitudinalement dans la glissière 5 de la structure de support 6, ces doigts 14 étant reliés par des zones de moindre résistance à des moyens de positionnement 15 de la vitre sur la structure de support 6.

Avantageusement, les doigts 14 sont escamotables à l'intérieur d'évidements par exemple 16 des moyens de positionnement, par lesdits patins, lors de la première manoeuvre des moyens d'actionnement tendant à les écarter.

Dans ce cas également, les moyens de butée sont disposés à proximité de chaque extrémité de la glissière 5.

Comme on peut le voir sur la Fig.3 qui représente une variante de réalisation des moyens de fixation, ceux-ci peuvent comporter par exemple deux lèvres en regard l'une de l'autre, dont une seule 17 est visible, fixées sur la structure de support 6 et comportant chacune un évidement 18 adapté pour coopérer avec un téton 19 solidaire de la vitre. Par ailleurs, des moyens de guidage 20 constitués par exemple par des plans inclinés peuvent également être prévus sur les lèvres pour assurer un guidage du téton 19 lors de sa descente dans les moyens de fixation.

Comme cela est représenté sur les Fig.1 et 4, les patins peuvent présenter une section longitudinale rectangulaire et ils sont montés articulés autour de rotules, par exemple 21, comme le patin 22 représenté sur la Fig.4, ces rotules étant fixées sur des extrémités correspondantes des bras par exemple 23.

Avantageusement, chaque patin est constitué par deux parties 22a, 22b fixées l'une sur l'autre, ces patins étant disposés dans une glissière 24 d'une structure de support comportant des moyens de fixation de la vitre et des moyens de centrage et de positionnement par exemple 25 de type tel que décrit précédemment.

Ainsi, cette structure des patins permet d'améliorer leur déplacement dans la glissière et évite une usure excessive de ceux-ci comme c'était le cas dans l'état de la technique. Par ailleurs, la manoeuvre du dispositif d'actionnement de la vitre est également facilitée.

Enfin, chaque rotule par exemple 22, peut également comporter des parties en saillie frangibles, par exemple 26, reliées à la rotule correspondante, par une zone 26a de moindre résistance, et bloquées entre les deux parties du patin, pour bloquer celui-ci en position par rapport à la rotule afin de faciliter son montage dans la glissière de la structure de support, les parties en saillie étant frangibles lors de la première manoeuvre tendant à déplacer ces patins.

## Revendications

1. Dispositif de lève-vitre notamment pour véhicule automobile, du type comportant des moyens d'actionnement d'un mécanisme de montée et de descente de la vitre, à bras en X (1,2; 23), dans lequel des extrémités des bras comportent des patins (3, 4; 22) coulissant dans une glissière (5;24) d'une structure de support (6) comportant des moyens de fixation (7) de la vitre, caractérisé en ce que des moyens de butée frangibles (8,9; 14) sont prévus dans le trajet de déplacement des patins (3,4; 22) dans la glissière, de sorte que, lorsque les patins (3,4; 22) sont en appui contre ces moyens de butée (8,9;14), ils bloquent la structure de support (6) en position par rapport aux patins (3,4; 22) et donc au mécanisme de lève-vitre et déterminent ainsi une position de montage de la vitre dans les moyens de fixation (7) de la vitre sur la structure de support (6), les moyens de butée (8,9;14) étant frangibles par les patins (3,4; 22) lors de la première manoeuvre tendant à les écarter.

2. Dispositif selon la revendication 1, caractérisé en ce que les moyens de butée comprennent des parties en saillie (8,9) s'étendant transversalelent dans la glissière (5) de la structure de support (6), ces parties en saillie étant reliées par des zones (8a,9a) de moindre résistance à des moyens (12,13) de positionnement de la vitre sur la structure de support (6).

3. Dispositif selon la revendication 1, caractérisé en ce que les moyens de butée comprennent des doigts (14) s'étendant longitudinalement dans la glissière (5) de la structure de support (6), ces doigts étant reliés par des zones de moindre résistance à des moyens (15) de positionnement de la vitre sur la structure de support (6).

4. Dispositif selon la revendication 3, caractérisé en ce que les doigts (14) sont escamotables à l'intérieur d'évidements (16) des moyens de positionnement (15), par lesdits patins (3,4).

5. Dispositif selon l'une quelconque des revendications précédentes, caractérisé en ce que les moyens de butée (8,9;14) sont disposés à proximité des extrémités de la glissière (5).

6. Dispositif selon l'une quelconque des revendications précédentes , caractérisé en ce que les patins (3,4;22) présentent une section longitudinale rectangulaire et en ce qu'ils sont montés articulés autour de rotules (21) fixées sur les extrémités des bras (1,2;23).

7. Dispositif selon la revendication 6, caractérisé en ce que lesdits patins (22) comprennent deux parties (22a,22b) fixées sur l'une sur l'autre.

8. Dispositif selon l'une quelconque des revendications 6 ou 7, caractérisé en ce que les rotules (21) comprennent des parties en saillie frangibles (26), s'étendant dans les patins (22), pour bloquer ceux-ci par rapport aux rotules, ces parties en saillie étant frangibles par les patins lors de la première manoeuvre tendant à les déplacer.

**Patentansprüche**

1. Fensterhebevorrichtung insbesondere für Kraftfahrzeuge, des Typs mit Mitteln zur Betätigung eines Hebe- und Absenkmechanismus für die Fensterscheibe, mit X-förmigen Armen (1, 2; 23), bei welchem die Enden der Arme Kufen (3, 4; 22) aufweisen, die in einer Gleitschiene (5; 24) eines Trägeraufbaus (6) gleiten, der Befestigungsmittel (7) für die Scheibe aufweist, dadurch gekennzeichnet, daß in der Bewegungsbahn der Kufen (3, 4; 22) in der Gleitschiene brechbare Anschlagmittel (8, 9; 14) vorgesehen sind, so daß, wenn die Kufen (3, 4; 22) in Anlage gegen die Anschlagmittel (8, 9; 14) sind, diese den Trägeraufbau (6) in Stellung bezüglich der Kufen (3, 4; 22) und damit des Fensterhebemechanismus blockieren und so eine Montagestellung zur Montage der Scheibe in den Mitteln (7) zur Befestigung der Scheibe auf dem Trägeraufbau (6) bestimmen, wobei die Anschlagmittel (8, 9; 14) durch die Kufen (3, 4; 22) bei der ersten Betätigung, die sie zu spreizen trachtet, brechbar sind.

2. Vorrichtung nach Anspruch 1, dadurch gekennzeichnet, daß die Anschlagmittel vorspringende Teile (8, 9) umfassen, die sich quer in der Gleitschiene (5) des Trägeraufbaus (6) erstrecken, wobei diese vorspringenden Teile durch Zonen (8a, 9a) geringerer Festigkeit mit Mitteln (12, 13) zur Positionierung des Fensters auf dem Trägeraufbau (6) verbunden sind.

3. Vorrichtung nach Anspruch 1, dadurch gekennzeichnet, daß die Anschlagmittel Zapfen (14) umfassen, die sich in Längsrichtung in der Gleitschiene (5) des Trägeraufbaus (6) erstrecken, wobei diese Zapfen durch Zonen geringerer Festigkeit mit Mitteln (15) zur Positionierung des Fensters auf dem Trägeraufbau (6) verbunden sind.

4. Vorrichtung nach Anspruch 3, dadurch gekennzeichnet, daß die Zapfen (14) durch die Kufen (3, 4) in das Innere von Ausnehmungen (16) der Mittel zur Positionierung (15) versenkbar sind.

5. Vorrichtung nach irgendeinem der vorstehenden Ansprüche, dadurch gekennzeichnet, daß die Anschlagmittel (8, 9; 14) in der Nähe der Enden der Gleitschiene (5) angeordnet sind.

6. Vorrichtung nach irgendeinem der vorstehenden Ansprüche, dadurch gekennzeichnet, daß die Kufen (3, 4; 22) einen rechteckigen Längsschnitt aufweisen und daß sie um an den Enden der Arme (1, 2; 23) angebrachte Kugelgelenke (21) drehbar sind.

7. Vorrichtung nach Anspruch 6, dadurch gekennzeichnet, daß die Kufen (22) zwei aneinander befestigte Teile (22a, 22b) umfassen.

8. Vorrichtung nach irgendeinem der Ansprüche 6 und 7, dadurch gekennzeichnet, daß die Kugelgelenke (21) vorspringende brechbare Teile (26) umfassen, die sich in den Kufen (22) erstrecken, um diese in Bezug auf die Kugelgelenke zu blockieren, wobei diese vorspringenden Teile durch die Kufen bei der ersten Betätigung, die sie zu spreizen trachtet, brechbar sind.

**Claims**

1. Window winding device, particularly for a motor vehicle, of the type comprising means for actuating a mechanism for raising and lowering the window, with arms in an X (1, 2; 23), in which ends of the arms comprise pads (3, 4; 22) sliding in a channel (5; 24) on a support structure (6) comprising means (7) for fixing the window, characterised in that breakable stop means (8, 9; 14) are provided in the path of movement of the pads (3, 4; 22) in the channel such that when the pads (3, 4; 22) are up against these stop means (8, 9; 14) they lock the support structure (6) in position with respect to the pads (3, 4; 22) and therefore to the window winding mechanism and thereby determine a position for mounting the window in the means (7) for fixing the window on the support structure (6), the stop means (8, 9; 14) being breakable by the pads (3, 4; 22) at the time of the first operation tending to separate them.

2. Device as claimed in claim 1, characterised in that the stop means comprise projecting parts (8, 9) extending transversely in the channel (5) of the support structure (6), these projecting parts being connected, through zones (8a, 9a) of less strength, to means (12, 13) for positioning the window on the support structure (6).

3. Device as claimed in claim 1, characterised in that the stop means comprise fingers (14) extending longitudinally in the channel (5) of the support structure (6), these fingers being connected through zones of less strength to means (15) for positioning the window on the support structure (6).

4. Device as claimed in claim 3, characterised in that the fingers (14) are retractable inside recesses (16) in the positioning means (15), through the said pads (3, 4).

5. Device as claimed in any one of the preceding claims, characterised in that the stop means (8, 9; 14) are arranged close to the ends of the channel (5).

6. Device as claimed in any one of the preceding claims, characterised in that the pads (3, 4; 22) have a rectangular longitudinal section and in that they are mounted so as to hinge about pivots (21) fastened on the ends of the arms (1, 2; 23).

7. Device as claimed in claim 6, characterised in that the said pads (22) comprise two parts (22a, 22b) fastened to one another.

8. Device as claimed in either one of claims 6 or 7, characterised in that the pivots (21) comprise breakable projecting parts (26) extending into the pads (22) in order to lock the latter with respect to the pivots, these projecting parts being breakable by the pads at the time of the first operation tending to move them.

## FIG.1

8a
8
12
3
1
10 11 7
5
6
2
4
13
9a
9

EP 0 309 315 B1

# FIG.3

# FIG.2

# FIG.4